# EUROPÄISCHE PATENTSCHRIFT

(11) **EP 1 535 357 B1**
(45) Veröffentlichungstag und Bekanntmachung des Hinweises auf die Patenterteilung: **24.05.2006**
(21) Anmeldenummer: 03790784.7
(22) Anmeldetag: 04.07.2003
(51) Int. Cl.: H01M 2/16

(54) **SEPARATOR ZUR VERWENDUNG IN HOCHENERGIEBATTERIEN SOWIE VERFAHREN ZU DESSEN HERSTELLUNG**
SEPARATOR FOR USE IN HIGH-ENERGY BATTERIES AND METHOD FOR THE PRODUCTION THEREOF
SEPARATEUR UTILISE DANS DES BATTERIES HAUTE ENERGIE ET SON PROCEDE DE PRODUCTION

(30) Priorität: 24.08.2002 DE 10238944
(43) Veröffentlichungstag der Anmeldung: 01.06.2005
(73) Patentinhaber: Degussa AG, 40474 Düsseldorf (DE)
(72) Erfinder: HENNIGE, Volker, 48249 Dülmen (DE); HYING, Christian, 46414 Rhede (DE); HÖRPEL, Gerhard, 48301 Nottuln (DE)
(86) Internationale Anmeldenummer: PCT/EP2003/007163
(87) Internationale Veröffentlichungsnummer: WO 2004/021476

(56) Entgegenhaltungen:
- WO-A-99/15262
- DE-A- 19 918 856
- PATENT ABSTRACTS OF JAPAN vol. 1996, no. 07, 31. Juli 1996 (1996-07-31) -& JP 08 064193 A (NIPPON MUKI CO LTD), 8. März 1996 (1996-03-08)
- PATENT ABSTRACTS OF JAPAN vol. 006, no. 176 (E-130), 10. September 1982 (1982-09-10) -& JP 57 095071 A (FUJIKURA LTD), 12. Juni 1982 (1982-06-12)

## Beschreibung

Ein elektrischer Separator ist ein Separator, der in Batterien und anderen Anordnungen, in denen Elektroden, z. B. unter Aufrechterhaltung von Ionenleitfähigkeit, voneinander separiert werden müssen, eingesetzt wird.

Ein Separator ist ein dünner, poröser, elektronisch isolierender Stoff mit hoher Ionendurchlässigkeit, guter mechanischer Festigkeit und Langzeitstabilität gegen die im System, z. B. im Elektrolyten der Batterie, verwendeten Chemikalien und Lösungsmittel. Er soll in Batterien die Kathode von der Anode elektronisch völlig isolieren. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die von Batterie-Zellen. Die Entwicklung wiederaufladbarer Batterien wird daher durch die Entwicklung geeigneter Separatormaterialien beeinflusst.

Allgemeine Informationen über elektrische Separatoren und Batterien können z. B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen bzw. aus anorganischen Vliesstoffen, wie z. B. Vliesen aus Glas- oder KeramikMaterialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z. B. aus Polypropylen oder aus einem Polypropylen/Polyethylen/Polypropylen-Verbund.
Nachteile dieser organischen Polyolefinseparatoren sind deren relativ geringe thermische Belastbarkeit von unter 150 °C. Die verwendeten Polyolefine werden in den Li-Batterien beim Kontakt des Separators mit dem Lithium bzw. mit dem lithiierten Graphit langsam angegriffen.

Es gibt erste Versuche anorganische Verbundmaterialien als Separatoren einzusetzen. So wird in DE 198 38 800 ein elektrischer Separator, der ein flächiges, mit einer Vielzahl von Öffnungen versehenes, flexibles Substrat mit einer darauf befindlichen Beschichtung umfasst, welcher dadurch gekennzeichnet ist, dass das Material des Substrates ausgewählt ist aus Metallen, Legierungen, Kunststoffen, Glas und Kohlefaser oder einer Kombination solcher Materialien und die Beschichtung eine flächig durchgehende, poröse, elektrisch nicht leitende keramische Beschichtung ist. Die Separatoren, die einen Support aus elektrisch leitendem Material aufweisen (wie im Beispiel angegeben), haben sich allerdings als ungeeignet für Lithium-Ionen-Zellen herausgestellt, da die Beschichtung in der beschriebenen Dicke nicht großflächig fehlerfrei hergestellt werden kann und es somit sehr leicht zu Kurzschlüssen kommt. Außerdem sind so dünne Metallgewebe, wie sie für sehr dünne Separatoren benötigt werden, kommerziell nicht verfügbar.

In vorangehenden Arbeiten (DE 101 42 622) konnten wir zeigen, dass mit einem Material, das, ein flächiges, mit einer Vielzahl von Öffnungen versehenes, flexibles Substrat mit einer auf und in diesem Substrat befindlichen Beschichtung umfasst, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist, und wobei der resultierende Separator eine Dicke von kleiner 100 µm aufweist und biegbar ist, ein Separator herstellbar ist, der in Verbindung mit dem Elektrolyten einen genügend geringen Widerstand aufweist und trotzdem eine ausreichend große Langzeitbeständigkeit aufweist.

Hochenergiebatterien werden in verschiedenen Anwendungen eingesetzt, bei denen es darauf ankommt eine möglichst große Menge an elektrischer Energie verfügbar zu haben. Dies ist beispielsweise bei Traktionsbatterien aber auch bei der Not-Strom-Versorgung mit Batterien (Auxillary Power Systems) der Fall. Die Energiemenge wird dabei häufig in gewichts- [Wh/kg] oder in volumenbezogenen [Wh/L] Größen angegeben. Augenblicklich werden in Hochenergiebatterien Energiemengen von 350 bis 400 Wh/L und von 150 bis 200 Wh/kg erreicht. Die abgefragte Leistung bei solchen Batterien ist nicht so groß, so dass man Kompromisse hinsichtlich des Innenwiderstandes machen kann. Das heißt, dass die Leitfähigkeit des Elektrolyt gefüllten Separators beispielsweise nicht so groß sein muss wie bei Hochleistungsbatterien, so dass dadurch auch andere Separatorkonzepte möglich werden.

So können bei Hochenergiesystemen auch Polymerelektrolyte eingesetzt werden, die mit 0,1 bis 2 mS/cm eine doch recht geringe Leitfähigkeit besitzen. Solche Polymerelektrolytzellen können nicht als Hochleistungsbatterien eingesetzt werden.

Separatormaterialien für die Anwendung in Hochenergiebatteriesystemen müssen folgende Eigenschaften besitzen:
- dünn → geringer spezifischer Platzbedarf
- leicht → geringes spezifisches Gewicht
- sehr gute Benetzbarkeit → da sonst nicht benetzte Totzonen entstehen
- sehr sicher → Die Sicherheit ist sehr wichtig, da in diesen Batterien sehr große spezifische elektrische Energiemengen transportiert werden.

In vielen, vor allem mobilen Anwendungen werden sehr große Energiemengen benötigt (z. B. in Traktionsbatterien). Die Batterien in diesen Anwendungen speichern im vollgeladenen Zustand also große Energiemengen. Diese Energien dürfen in keinster Weise bei einer Fehlfunktion der Batterie bzw. bei einem Unfall unkontrolliert freigesetzt werden, da dies unweigerlich zur Explosion der Zelle unter Feuererscheinung führen würde.

Der in DE 101 42 622 beschriebene Separator weist zwar eine sehr hohe Leitfähigkeit auf, jedoch genügt der dort beschriebene Separator immer noch nicht den Anforderungen an einen technisch einsetzbaren Separator bezüglich der Dicke und des Gewichts sowie der Sicherheit. In der noch nicht veröffentlichen Anmeldung DE 102 08 277 wurde das Gewicht und die Dicke des Separators dadurch reduziert, dass ein Polymervlies eingesetzt wurde, aber auch die dort beschriebenen Ausführungsformen eines Separators genügen noch nicht allen Anforderungen an einen Separator für eine Lithium-Hochenergiebatterie, insbesondere weil in dieser Anmeldung besonderer Wert gelegt wurde auf möglichst große Poren des Separators. Mit den dort beschriebenen, bis 5 µm großen Partikeln ist es aber nicht möglich, 10- 20 µm dicke Separatoren herzustellen, da hier nur einige wenige Partikel übereinander zu liegen kämen. Dadurch würde der Separator zwangsläufig eine große Fehler- und Störstellendichte (z. B. Löcher, Risse, ...) aufweisen. Zudem bestehen die großen Partikel in dieser Schrift aus Al₂O₃ und ZrO₂. Aufgrund der hohen Dichte dieser Keramiken weisen diese Separatoren ein großes Flächengewicht auf, wodurch die massenbezogene spezifische Energiedichte (in Wh/g) reduziert wird.

Der vorliegenden Erfindung lag deshalb die Aufgabe zu Grunde einen möglichst leichten und dünnen Separator bereitzustellen, der einfach hergestellt werden kann und insbesondere zur Anwendung in Lithium-Hochenergiebatterien geeignet ist.

Überraschenderweise wurde gefunden, dass sich Separatoren mit einem Gewicht von weniger als 50g/m² und einer Dicke von kleiner 35 µm, durch Aufbringen einer keramischen Beschichtung auf ein Polymervlies, welches eine Dicke von kleiner 30 µm aufweist, herstellen lassen und diese Separatoren hervorragend für die Verwendung in Lithium-Hochenergiebatterien geeignet sind.

Gegenstand der vorliegenden Erfindung ist deshalb ein Separator, gemäß den unabhängigen Ansprüchen 1 und 20.

Ebenso ist Gegenstand der vorliegenden Erfindung ein Verfahren zur Herstellung eines erfindungsgemäßen Separators, gemäß dem unabhängigen Ansprüch 12.

Außerdem sind Gegenstand der vorliegenden Erfindung die Verwendung eines erfindungsgemäßen Separators in Lithium-Hochenergie-Batterien sowie Batterien, die einen erfindungsgemäßen Separator aufweisen.

Der erfindungsgemäße Separator hat den Vorteil, dass er besonders leicht und besonders dünn hergestellt werden kann. Dies wird durch spezielle Herstellparameter erreicht: zum einen durch die Verwendung eines 5 bis 30 µm, vorzugsweise 10 bis 20 µm dicken Vlieses als Support für die Beschichtung und zum anderen durch die Verwendung eines speziellen Beschichtungsschlickers. Bei dem 5 bis 30 µm dicken Vlies handelt es sich vorzugsweise um ein spezielles nassgelegtes Vlies aus Polyethylenterephtalat(PET)-Fasern, dass nach der Vlieslegung auf diese Dicke herunter kalandriert wird.

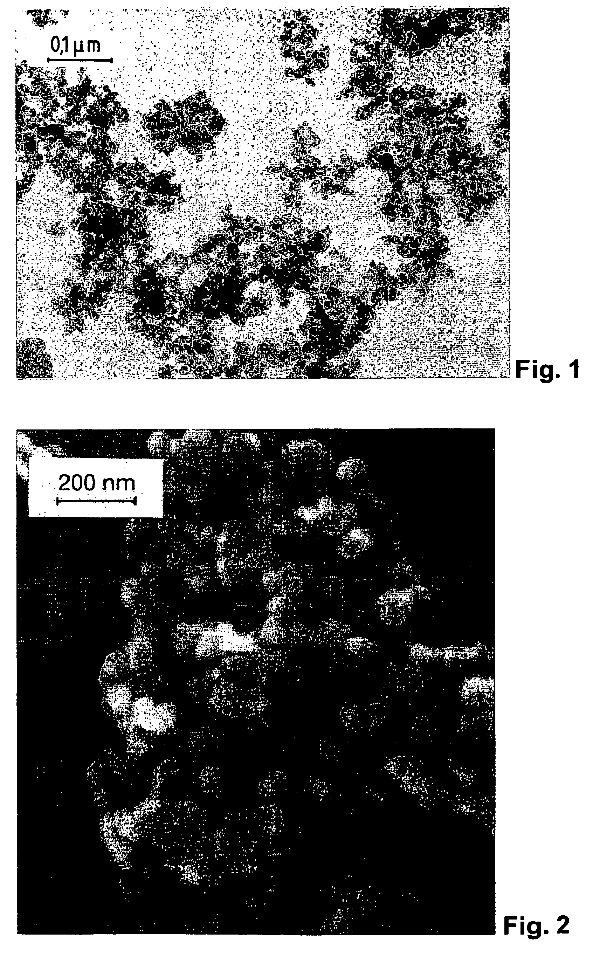

Die Beschichtung erfolgt nicht mit den üblichen Beschichtungsschlickern wie in DE 101 42 622 oder DE 102 08 277 beschrieben, die große Partikel (bis zu 3-5 µm) aufweisen, sondern mit Schlickern, die sehr kleine Partikel aufweisen, die durch Aggregation und Agglomeration größere, zum Teil fraktale Strukturen bilden. Dadurch erhält man größere Poren, als man sie bei dieser Primärpartikelgröße erwarten würde. So ist es dann möglich mit 7 bis 50nm großen Primärpartikeln eine Beschichtung zu realisieren, die noch eine ausreichend hohe Porosität und Porenweite hat. Pyrogene Kieselsäure, wie z. B. Aerosil®200 (Degussa) stellt z. B. ein solches geeignetes Material dar. Die Bilder Fig. 1 und 2 zeigen elektronmikroskopische Aufnahmen der schönen fraktalen Strukturen dieser Pulver. Jedes Aggregat/Agglomerat setzt sich aus vielen kleinen, nm-großen Partikeln zusammen. Somit lassen sich vorzugsweise 10-20 µm dicke Separatoren fertigen, die eine hohe Integrität besitzen und noch eine geeignete Porengeometrie aufweisen. Die Verklebung dieser Partikel erfolgt über SiO₂ oder ZrO₂. Diese Separatoren weisen sowohl eine sehr große Porosität als auch eine große Sekundärporengröße auf. Die sehr große Porosität kommt durch das Porengefüge zustande, das zum einen die Primärpartikel (Primärporen) und zum andem die "sekundären" Aggregate/Agglomerate bilden.

Vorzugsweise wird als pyrogenes Oxid SiO₂ verwendet. Da SiO₂ eine geringere Dichte als Al₂O₃ oder ZrO₂ hat, zeichnen sich diese Separatoren durch eine deutlich höhere massenbezogene spezifische Energiedichte aus.

Bei dem erfindungsgemäßen hybriden, also anorganische Komponenten und polymeres Trägermaterial aufweisenden Separator kommt es zum inhärenten Shut-Down wenn durch die hohe Temperatur das Polymergefüge des Trägermaterials schmilzt und in die Poren des anorganischen Materials eindringt und diese dadurch verschließt. Zum sogenannten Melt-Down kommt es bei dem erfindungsgemäßen Separator dagegen nicht. Der erfindungsgemäße Separator erfüllt also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Falls zudem ein nicht inhärenter Shut down-Mechanismus für die Anwendung zwingend erforderlich ist, so kann dies beispielweise dadurch erreicht werden, das die Oberfläche und/oder die Poren des erfindungsgemäßen keramischen bzw. hybriden Separators mit einem Stoff ausgestattet werden, der bei Erreichen der Temperaturgrenze die Poren schließt und den weiteren Ionenfluss verhindert. Dies kann Beispielweise durch ein Polymer oder ein Wachs erreicht werden, dessen Schmelzpunkt in diesem Bereich liegt.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei dem erfindungsgemäßen hybriden Separator schmilzt allenfalls das polymere Substratmaterial, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Ein weiterer, nicht unerheblicher Vorteil des erfindungsgemäßen hybriden Separators liegt in der sehr guten Benetzbarkeit. Aufgrund der hydrophilen keramischen Beschichtung erfolgt die Benetzung mit Elektrolyten sehr rasch. Bei weniger hydrophilen Elektrolyten lässt sich die Oberfläche aber auch gezielt hydrophober einstellen. Damit ist eine schnelle, und damit auch kostengünstige, Herstellung der Batterien gewährleistet.

Außerdem besitzt der erfindungsgemäße Separator einen deutlichen Preisvorteil gegenüber Separatoren auf Basis von Glas- oder Keramikgeweben, wie sie z. B. in DE 101 42 622 beschrieben werden. Dies liegt neben den deutlich unterschiedlichen Materialkosten unter anderem daran, dass das Polymersubstrat wesentlich einfacher zu handhaben ist als Glas- oder Keramikgewebe, welches doch eine gewisse Spröde aufweist und bei unvorsichtiger Handhabung zerstört wird. Der gesamte Herstellungsprozess dieser auf Glas und Keramik-Geweben bestehenden Separatoren ist deshalb aufwändiger und damit kostenintensiver.

Der erfindungsgemäße Separator wird im Folgenden beschrieben, ohne dass die Erfindung auf diesen beschränkt sein soll.

Die erfindungsgemäßen Separatoren, insbesondere für Lithium-Hochenergiebatterien, umfassend ein flächiges, mit einer Vielzahl von Öffnungen versehenes, flexibles Substrat mit einer auf und in diesem Substrat befindlichen porösen anorganischen Beschichtung, wobei das Material des Substrates ausgewählt ist aus einem Vlies aus nicht elektrisch leitfähigen Polymerfasern, zeichnen sich dadurch aus, dass sie ein Gewicht von kleiner 50 g/m², vorzugsweise kleiner 20g/m² und ganz besonders bevorzugt zwischen 10 und 20 g/m² und eine Dicke von kleiner 35 µm, vorzugsweise kleiner 25 µm und ganz besonders bevorzugt eine Dicke von 15 und 25 µm aufweisen. Durch die geringe Dicke wird ein besonders geringer elektrischer Widerstand des Separators in der Anwendung mit einem Elektrolyten und gleichzeitig eine möglichst geringes Gewicht erzielt. Der Separator selbst weist natürlich einen sehr hohen elektrischen Widerstand auf, da er selbst isolierende Eigenschaften aufweisen muss.

Das als Substrat dienende Vlies aus Polymerfasern weist vorzugsweise eine Porosität von mehr als 50 % auf. Bevorzugt weist das Substrat eine Porosität von 50 bis 97 %, besonders bevorzugt von 60 bis 90 % und ganz besonders bevorzugt von 70 bis 90 % auf Die Porosität ist dabei definiert als das Volumen des Vlieses (100 %) minus dem Volumen der Fasern des Vlieses, es definiert also den Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Die große Porosität des Substrates ermöglicht auch eine höhere Porosität des erfindungsgemäßen hybriden Separators, weshalb eine höhere Aufnahme an Elektrolyten mit dem erfindungsgemäßen Separator erzielt werden kann.

Damit ein Separator mit isolierenden Eigenschaften erhalten werden kann, weist dieser als Polymerfasern vorzugsweise Fasern von Polymeren auf, die ausgewählt sind aus Polyacrylnitril, Polyester (z. B. PET) und/oder Polyolefin (PO), wie z. B. Polypropylen (PP) oder Polyethylen (PE), oder Mischungen solcher Polyolefine. Polyolefine sind dann bevorzugt, wenn diese eine höhere Temperaturbeständigkeit besitzen. Das heißt, sie müssen bei den Verfestigungstemperaturen des Separators noch formstabil sein. Die Polymerfasern weisen vorzugsweise einen Durchmesser von 0,1 bis 10 µm, besonders bevorzugt von 1 bis 4 µm auf.

Das flexible Substrat, insbesondere das Vlies weist bevorzugt eine Dicke von kleiner 30 µm, vorzugsweise kleiner 20 µm und ganz besonders bevorzugt von 10 bis 20 µm auf. Die Dicke des Substrates hat einen großen Einfluss auf die Eigenschaften des Separators, da zum einen die Flexibilität aber auch der Flächenwiderstand des mit Elektrolyt getränkten Separators von der Dicke des Substrates abhängig ist. Zudem erlauben dünnere Separatoren eine erhöhte Packungsdichte in einem Batteriestapel, so dass man im gleichen Volumen eine größere Energiemenge speichern kann. Ferner kann durch Erhöhung der Elektroden- und Separatorfläche bei konstantem Gesamtgewicht die Grenzstromdichte erhöht werden.

Um in Hochenergiebatterien besonders bevorzugt einsetzbar zu sein, ist es vorteilhaft, wenn der Separator ein möglichst geringes Gewicht aufweist. Es ist deshalb besonders vorteilhaft, wenn als Vliese solche eingesetzt werden, die ein Gewicht von kleiner 20 g/m², vorzugsweise kleiner 10 g/m² und besonders bevorzugt von 5 und 10 g/m² aufweisen.

Der erfindungsgemäße Separator weist eine poröse, elektrisch isolierende, keramische Beschichtung auf. Es kann vorteilhaft sein, wenn die auf und in dem Substrat befindliche Beschichtung ein nicht elektrisch leitendes Oxid der Elemente Al, Zr und/oder Si aufweist. Die Beschichtung weist nicht die bekannten großen Partikel (mittlerer Partikeldurchmesser von bis zu 3 - 5 µm) auf, wie sie bei üblichen Separatoren oder auch Membranen verwendet werden, sondern sehr kleine Primärpartikel, die durch Aggregation und Agglomeration größere zum Teil fraktale Strukturen bilden auf. Durch die besondere Ausführungsform, d. h. die besondere Herstellung des Separators, erhält man größere Poren, als man sie bei der Primärpartikelgröße der eingesetzten Oxide erwarten würde. So ist es dann möglich mit Partikeln mit einer Primärpartikelgröße von 5 bis 100 nm, vorzugsweise 7 bis 50 nm eine Beschichtung zu realisieren, die eine hohe Porosität und eine überraschend große Porenweite aufweist. Durch den Aufbau der Beschichtung aus relativ kleinen Primärpartikeln, die vorzugsweise aggregiert und über SiO₂ oder ZrO₂ verklebt sind, lassen sich die erfindungsgemäßen sehr dünnen, vorzugsweise von 10 bis 20 µm dicken Separatoren erst realisieren. Diese besitzen eine hohe Integrität (d. h. keine Löcher, Risse, sonstige Fehlstellen) und weisen eine besonders geeignete Porengeometrie auf.

Als Partikel mit einer Primärpartikelgröße von 5 bis 100 nm lassen sich vorzugsweise pyrogene Oxide wie Aerosil® der Fa. Degussa, CAB-O-SIL® der Fa. Cabot, Aluminiumoxid C der Fa. Degussa oder andere pyrogene Oxide wie pyrogenes Zirkonoxid einsetzen. In Tabelle 1 werden die Porengrößen und Porositäten (bestimmt mittels Hg-Porosimetrie) der keramischen Komponenten, bei Nutzung verschieden feiner pyrogener Oxide der Fa. Degussa, des erfindungsgemäßen Separators zusammengefasst. Aufgrund der Primärpartikelgröße dieser Oxide wäre ein mittlerer Porenradius von 5 bis 15 nm zu erwarten.

**Tabelle 1: Porenradius und Porosität keramischer Komponenten der Separatorbeschichtungen. (Gewichtsverhältnis pyrogenes Oxid / Sol = 1 / 0,067; Lösemittel: iso-Porpanol)**

| Pyrogenes Oxid | Mittlerer Porenradius [nm] | Porosität [%] |
|---|---|---|
| Aerosil 200 | 95 | 82 |
| Aerosil 300 | 75 | 79 |
| Aerosil 380 | 72 | 75 |

Die keramischen Komponenten des erfindungsgemäßen Separators weisen eine bevorzugte Porosität von mehr als 50 % besonders bevorzugt von mehr als 60 % und ganz besonders bevorzugt von bis zu 80 % auf.

Der erfindungsgemäße Separator weist vorzugsweise eine Porosität von 30 bis 80 %, besonders bevorzugt von 50 bis 70 % auf. Die Porosität bezieht sich dabei auf die erreichbaren, also offenen Poren. Die Porosität kann dabei mittels der bekannten Methode der Quecksilberporosimetrie bestimmt werden oder kann aus dem Volumen und der Dichte der verwendeten Einsatzstoffe errechnet werden, wenn davon ausgegangen wird, dass nur offene Poren vorliegen. Die auf und in dem Substrat befindliche Beschichtung weist besonders bevorzugt ein Oxid der Metalle Al, Zr und/oder Si auf.

Die erfindungsgemäßen Separatoren zeichnen sich dadurch aus, dass sie eine Reißfestigkeit von mindestens 1 N/cm, vorzugsweise von mindestens 3 N/cm und ganz besonders bevorzugt von 3 bis 10 N/cm aufweisen. Die erfindungsgemäßen Separatoren lassen sich vorzugsweise ohne Beschädigung bis auf jeden Radius bis herab zu 100 m, vorzugsweise bis herab zu 50 mm und ganz besonders bevorzugt bis herab zu 0,5 mm biegen. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Es kann vorteilhaft sein, wenn der Separator einen nicht inhärenten Shut-Down-Mechanismus aufweist. Dieser kann z. B. dadurch realisiert werden, dass auf oder in dem Separator eine sehr dünne Wachs- oder Polymerpartikelschicht vorhanden ist, die bei einer gewünschten Abschalttemperatur schmelzen, sogenannte Abschaltpartikel. Besonders bevorzugte Materialien, aus denen die Abschaltpartikel bestehen können sind beispielweise natürliche oder künstliche Wachse, niedrigschmelzende Polymere, wie z. B. Polyolefine, wobei das Material der Abschaltpartikel so ausgewählt wird, das die Partikel bei der gewünschten Abschalttemperatur aufschmelzen und die Poren des Separators verschließen, so dass ein weiterer Ionenfluss verhindert wird.

Vorzugsweise weisen die Abschaltpartikel eine mittlere Partikelgröße (D_{w}) auf, die größer oder gleich der mittleren Porengröße (dₛ) der Poren der Separatorschicht ist. Dies ist insbesondere deshalb vorteilhaft, weil so ein Eindringen und Verschließen der Poren der anorganischen Schicht des Separators, das eine Reduktion des Porenvolumens und damit der Leitfähigkeit des Separators und auch der Leistungsfähigkeit der Batterie zur Folge hätte, verhindert wird. Die Dicke der Abschaltpartikelschicht ist nur in sofern kritisch, als das eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von 2 D_{w} bis D_{w} beträgt. Ein so ausgerüsteter Separator weist ein primäres Sicherheitsmerkmal auf. Im Gegensatz zu den rein organischen Separatormaterialien kann dieser Separator aber nicht vollständig schmelzen und es kann somit nicht zum Melt-Down kommen. Diese Sicherheitsmerkmale sind aufgrund der sehr großen Energiemengen für Hochenergiebatterien sehr wichtig und werden deshalb häufig gefordert.

Der Separator verfügt zudem aufgrund seiner hydrophilen Oberfläche über eine sehr gute Benetzbarkeit mit polaren Lösemitteln. Dadurch kann selbst ein so dünnes Material noch vollständig mit Elektrolyten wie Ethylencarbonat (EC), Propylencarbonat (PC), Dimethylcarbonat (DMC), usw. getränkt werden. Polymere hydrophobere Separatoren, wie solche aus Polypropylen (PP) oder Polyethylen (PE), die nicht so gut benetzen, können bei diesen geringen Dicken nicht mit Elektrolyt durchtränkte Bereiche aufweisen, die als Totzonen nicht mehr für den Ionentransport zur Verfügung stehen und somit die spezifische Energiedichte reduzieren. Aufgrund der ausgesprochen guten Benetzbarkeit der erfindungsgemäßen Separatoren v. a. auch mit PC, das Polyolefine praktisch überhaupt nicht benetzt, können Batterien mit dem keramischen Separator auch PC als Lösemittel für die Leitsalze enthalten. Da PC einen deutlich höheren Siedepunkt besitzt und somit auch schlechter brennbar ist als etwa EC oder DMC kann mit den erfindungsgemäßen Separatoren ein weiterer Sicherheitsvorteil realisiert werden.

Der erfindungsgemäße Separator ist vorzugsweise erhältlich durch ein Verfahren zur Herstellung eines Separators, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus Vliesen mit einer Dicke von kleiner 30 µm von nicht elektrisch leitfähiger Fasern von Polymeren und die Beschichtung eine poröse, elektrisch isolierende, keramische Beschichtung ist.

Die Beschichtung wird auf das Substrat vorzugsweise durch Aufbringen einer Suspension, die zumindest ein nicht oder nur sehr schlecht elektrisch leitendes Oxid der Metalle Al, Zr und/oder Si sowie ein Sol aufweist, auf das Substrat und durch zumindest einmaliges Erwärmen, bei welchem die Suspension auf oder im oder aber auf und im Träger verfestigt wird, aufgebracht. Das Verfahren selbst ist aus WO 99/15262 bekannt, jedoch lassen sich nicht alle Parameter bzw. Einsatzstoffe, insbesondere nicht elektrisch leitfähige Einsatzstoffe, für die Herstellung des erfindungsgemäßen Separators einsetzen. Aufgrund der Auswahl der Einsatzstoffe ergeben sich auch bestimmte Verfahrensparameter, die für die als Separator geeigneten Materialkombinationen erst gefunden werden mussten.

Die Suspension kann z. B. durch Aufdrucken, Aufpressen, Einpressen Aufrollen, Aufrakeln, Aufstreichen, Tauchen, Spritzen oder Aufgießen auf und in das Substrat gebracht werden.

Die Polymerfasern sind bevorzugt ausgewählt aus Polyacrylnitril, Polyester, wie z. B. Polyethylenterephthalat und/oder Polyolefinen. Bevorzugt weist die erfindungsgemäße Membran Polymerfasern auf, die eine Erweichungstemperatur von größer 100 °C und eine Schmelztemperatur von größer 150 °C aufweisen. Es kann vorteilhaft sein, wenn die Polymerfasern einen Durchmesser von 0,1 bis 10 µm , vorzugsweise von 1 bis 4 µm aufweisen.

Das Material des Substrates ist vorzugsweise ausgewählt aus Vliesen von Polymerfasern mit einer Dicke von kleiner 30 µm. Es kann besonders vorteilhaft sein, wenn ein Substrat eingesetzt wird, welches eine Dicke von 5 bis 30 µm, bevorzugt von 10 bis 20 µm aufweist. Bei dem vorzugsweise von 10 bis 20 µm dicken Vlies handelt es sich vorzugsweise um ein spezielles nassgelegtes Vlies aus PET-Fasern, dass nach der Vlieslegung auf diese Dicke herunter kalandriert wird. Bevorzugt weist ein eingesetztes Vlies ein Gewicht von weniger als 20g/m², vorzugsweise von weniger als 10g/m² und ganz besonders bevorzugt von 5 bis 10 g/m² auf.

Die zur Herstellung der Beschichtung verwendete Suspension weist zumindest ein anorganisches Oxid des Aluminiums, Siliziums und/oder Zirkoniums und zumindest ein Sol der Elemente Al, Zr und Si auf, und wird durch Suspendieren von Partikeln zumindest eines dieser Oxide in zumindest einem dieser Sole hergestellt.

Die Sole werden durch Hydrolisieren zumindest einer Verbindung der Elemente Zr, Al oder Si erhalten. Es kann vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Nitrat, ein Chlorid, ein Carbonat und/oder eine Alkoholatverbindung der Elemente Zr, Al und/oder Si hydrolisiert. Die Hydrolyse erfolgt vorzugsweise in Gegenwart von Wasser, Wasserdampf, Eis oder einer Säure oder eine Kombination dieser Verbindungen.

In einer Ausführungsvariante des erfindungsgemäßen Verfahrens werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vemetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10-fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Aceton, Hexan, Cyclohexan, Ethylacetat und/oder Mischungen mit diesen Verbindungen, gelöst wird, bevor die eigentliche Hydrolyse vorgenommen wird. Ein so hergestelltes Sol kann zur Herstellung der erfindungsgemäßen Suspension eingesetzt werden.

Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von Separatoren durch Aufbringen und Verfestigen einer Suspension auf einen Träger an und für sich ist aus DE 101 42 622 und in ähnlicher Form aus WO 99/15262 bekannt, jedoch lassen sich nicht alle Parameter bzw. Einsatzstoffe, auf die Herstellung der erfindungsgemäßen Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membranen bzw. Separatoren erhalten werden, die Fehler aufweisen und damit unbrauchbar sind.

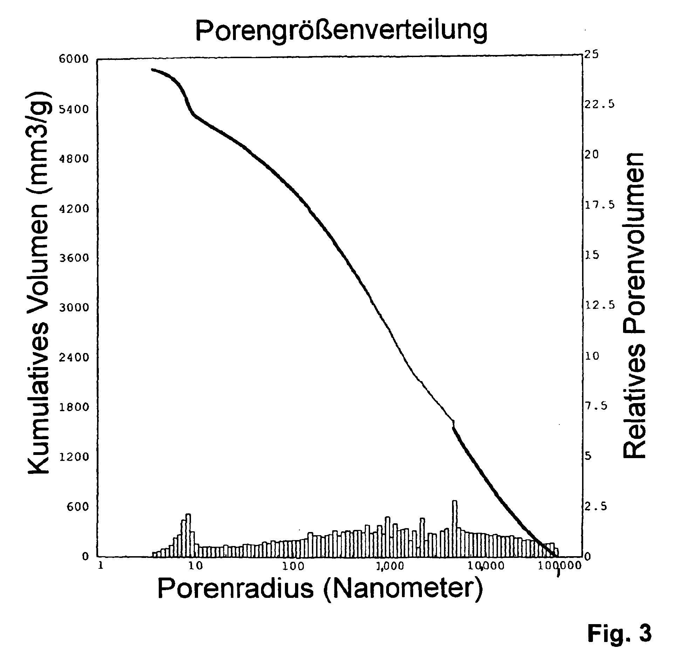

Es wurde nun überraschenderweise gefunden, dass ein Solsystem bzw. eine Suspension, welches bzw. welche im Benetzungsverhalten den Polymeren angepasst wurde, die Vliesmaterialien vollständig durchtränkt und somit fehlerfreie Beschichtungen erhältlich sind. Bevorzugt erfolgt bei dem erfindungsgemäßen Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Vernetzungsverhalten an das verwendete Substrat anzupassen. Nicht nur das Benetzungsverhalten wird durch die Wahl der Lösemittel beeinflusst, sondern auch die Eigenschaften der resultierenden keramischen Beschichtung. Den Einfluss des Lösemittels auf die Eigenschaften der keramischen Komponenten gibt Tabelle 2 wieder. Es ist deutlich zu erkennen, dass mit sehr unpolaren Lösemitteln wie Cyclohexan die größte Porosität und die größten mittleren Porenradien erzielt werden, während mit polarem Lösemittel (Gemisch aus Wasser und Ethanol) sehr kleine Porenradien und auch geringere Porositäten erzielt werden. Die Herstellung der keramischen Schichten unter Verwendung von polaren Lösemitteln, insbesondere von Cyclohexan oder Cyclohexan aufweisenden Mischungen ist deshalb besonders bevorzugt. In den Figuren Fig. 3 bis Fig. 5 ist jeweils ein Diagramm der Porengrößenverteilung in den keramischen Komponenten der Zusammensetzungen E, C und A der nachfolgenden Tabelle 2 angegeben.

**Tabelle 2:Einfluss des Lösemittels auf die Eigenschaften der keramischen Komponenten. (Zusammensetzung der Keramik: Aerosil 200/ Levasil-Sol = 1/0,067 in Gewichtsteilen.)**

| Lösungsmittel | mittl. Porenradius [nm] | Porosität [%] | Zusammensetzung |
|---|---|---|---|
| 18g Ethanol | 11 | 80 | A |
| 18g Wasser | | | |
| 36 g Ethanol | 36 | 80 | B |
| 53g iso-Propanol | 95 | 82 | C |
| 50g n-Butanol | 63 | 78 | D |
| 60g Cyclohexan | 310 | 85 | E |

Wie bereits gesagt, werden zur Herstellung der Suspension als anorganische Komponente, zumindest ein Metalloxid, ausgewählt aus den Oxiden der Elemente Zr, Al und Si, in einem Sol suspendiert. Vorzugsweise wird eine anorganische Komponente, die zumindest eine Verbindung, ausgewählt aus Aluminiumoxid, Zirkoniumoxid und/oder Siliziumdioxid, suspendiert. Vorzugsweise beträgt der Massenanteil der suspendierten Komponente das 1 bis 100fache, besonders bevorzugt das 1 bis 50fache des eingesetzten Sols.

Um bei den verwendeten dünnen Vliesen eine ausreichend homogene und möglichst fehlerfreie Beschichtung zu erzielen, werden bevorzugt Metalloxidpartikel suspendiert, die eine Primärpartikelgröße von 5 bis 100 nm, vorzugsweise von 7 bis 50 nm aufweisen. Als Partikel mit einer Primärpartikelgröße von 5 bis 100 nm werden besonders bevorzugt pyrogene Oxide wie Aerosil® der Fa. Degussa, CAB-O-SIL® der Fa. Cabot, Aluminiumoxid C der Fa. Degussa oder andere pyrogene Oxide wie pyrogenes Zirkonoxid eingesetzt.

Zur Verbesserung der Haftung der anorganischen Komponenten an Polymerfasern als Substrat kann es vorteilhaft sein, den eingesetzten Suspensionen Haftvermittler, wie z. B. organofunktionelle Silane beizufügen. Als Haftvermittler sind insbesondere Verbindungen, ausgewählt aus den Octylsilanen, den Vinylsilanen, den aminfunktionalisierten Silanen und/oder den Glycidylfunktionalisierten Silanen, wie z. B. die Dynasilane der Fa. Degussa einsetzbar. Besonders bevorzugte Haftvermittler für Polyethylen (PE) und Polypropylen (PP) sind Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidyl-funktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Der in WO 99/15262 beschriebene Zusatz von Methyltriethoxysilan zum Solsystem bei der Beschichtung von polymeren Trägermaterialien ist eine vergleichsweise schlechte Lösung des Problems der Haftfestigkeit von Keramik auf Polymerfasem. Zudem ist die Trocknungsdauer von 30 bis 120 min bei 60 bis 100 °C bei den beschriebenen Solsystemen nicht ausreichend um hydrolysebeständige keramische Materialien zu erhalten. Das heißt diese Materialien werden sich bei längerer Lagerung in wasserhaltigen Medien auflösen bzw. sie werden beschädigt werden. Andererseits würde die in WO99/15262 beschriebene Temperaturbehandlung von über 350 °C zu einem Verbrennen des hier verwendeten Polymervlieses und damit zur Zerstörung der Membran führen. Die Haftvermittler müssen also so ausgewählt werden, dass die Verfestigungstemperatur unterhalb des Schmelz- oder Erweichungspunktes des Polymeren und unterhalb dessen Zersetzungstemperatur liegt. Bevorzugt weisen erfindungsgemäße Suspensionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die folgende Tabelle enthält einen beispielhaften Überblick über einsetzbare Haftvermittler auf Basis von organofunktionellen Si-Verbindungen für typische als Vliesmaterial verwendete Polymere.

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

| | | |
|---|---|---|
| Mit: AMEO = 3-Aminopropyltriethoxysilan DAMO = 2-Aminoethyl-3-aminopropyltrimethoxysilan GLYMO = 3-Glycidyloxytrimethoxysilan MEMO = 3-methacryloxypropyltrimethoxysilan Silfin = Vinylsilan + Initiator + Katalysator VTEO = Vinyltriethoxysilan VTMO = Vinyltrimethoxysilan VTMOEO = Vinyltris(2-methoxyethoxy)silan | | |

In einer besonderen Ausführungsform des erfindungsgemäßen Verfahrens werden die oben genannten Haftvermittler in einem vorgeschalteten Schritt auf das Substrat, insbesondere das Polymervlies aufgebracht. Hierzu werden die Haftvermittler in einem geeigneten Lösemittel, wie z. B. Ethanol gelöst. Diese Lösung kann auch noch eine geringe Menge an Wasser, vorzugsweise die 0,5 bis 10fache Menge bezogen auf die molare Menge der hydrolysierbaren Gruppe, und kleine Mengen einer Säure, wie z. B. HCl oder HNO₃, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf das Substrat aufgebracht und der Haftvermittler durch eine Temperaturbehandlung bei 50 bis maximal 350 °C auf dem Substrat fixiert. Erst nach dem Aufbringen des Haftvermittlers erfolgt bei dieser Ausführungsvariante des erfindungsgemäßen Verfahrens das Aufbringen und Verfestigen der Suspension.
Durch das Aufbringen eines Haftvermittlers vor dem eigentlichen Aufbringen der Suspension kann das Haftverhalten der Substrate insbesondere gegenüber wässrigen, partikulären Solen verbessert werden, weshalb insbesondere so vorbehandelte Substrate mit Suspensionen auf Basis von handelsüblichen Solen, wie z. B. Zirkonnitratsol oder Silicasol erfindungsgemäß beschichtet werden können. Diese Vorgehensweise des Aufbringens eines Haftvermittlers bedeutet aber auch, dass das Herstellverfahren der erfindungsgemäßen Membran um einen Zwischen- bzw. Vorbehandlungsschritt erweitert werden muss. Dies ist machbar allerdings auch aufwendiger als die Verwendung von angepassten Solen denen Haftvermittler beigegeben wurden, hat aber auch den Vorteil, dass auch beim Einsatz von Suspensionen auf Basis von handelsüblichen Solen bessere Ergebnisse erzielt werden.

Die erfindungsgemäßen Beschichtungen werden durch Verfestigen der Suspension in und auf dem Substrat auf das Substrat aufgebracht. Erfindungsgemäß kann die auf und im Substrat vorhandene Suspension durch Erwärmen auf 50 bis 350 °C verfestigt werden. Da bei der Verwendung polymerer Substratmaterialien die maximal Temperatur durch das Substrat vorgegeben wird, ist diese entsprechend anzupassen. So wird je nach Ausführungsvariante des erfindungsgemäßen Verfahrens die auf und im Substrat vorhandene Suspension durch Erwärmen auf 100 bis 350 °C und ganz besonders bevorzugt durch Erwärmen auf 200 bis 280 °C verfestigt. Es kann vorteilhaft sein, wenn das Erwärmen für 1 Sekunde bis 60 Minuten bei einer Temperatur von 100 bis 350 °C erfolgt. Das Erwärmen erfolgt bevorzugt maximal 10 Minuten und besonders bevorzugt von 0,5 bis 10 Minuten. Besonders bevorzugt erfolgt das Erwärmen der Suspension zum Verfestigen auf eine Temperatur von 110 bis 300 °C, ganz besonders bevorzugt bei einer Temperatur von 200 bis 280 °C und vorzugsweise für 0,5 bis 10 min. Die Temperatur und Dauer der Behandlung wird durch die Temperaturbeständigkeit des als Substrat eingesetzten Vlieses vorgegeben und ist entsprechend anzupassen.

Bei der Verfestigung des Separators kann es je nach gewählter Temperaturhöhe bei einigen Polymermaterialien unter dem Temperatureinfluss zu Veränderungen in der chemischen Struktur kommen, so dass anschließend die Polymere nicht mehr in ihrem Ausgangszustand bzw. -modifikation vorliegen. So kann es zu einer teilweisen Karbonisierung von Polyimiden oder zur Bildung sogenannter Leiterpolymere bei Polyacrylnitril mit nachfolgender teilweiser Karbonisierung kommen. Diese Effekte führen immer zu einer Veränderung der Eigenschaften der Trägerwerkstoffe. Dies kann je nach Anwendung auch speziell beabsichtigt werden, da dadurch beispielsweise die Lösemittel-, Säure- und Laugebeständigkeit erhöht werden kann. Der Grad der Umwandlung kann dabei über Temperatur und Zeit beeinflusst werden.

Das erfindungsgemäße Erwärmen des Verbundes kann mittels erwärmter Luft, Heißluft, Infrarotstrahlung oder durch andere Erwärmungsmethoden nach dem Stand der Technik erfolgen.

Das erfindungsgemäße Verfahren kann z. B. so durchgeführt werden, dass das Substrat von einer Rolle abgerollt wird mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min, durch zumindest eine Apparatur, welche die Suspension auf und in den Support bringt, wie z. B. eine Walze, und zumindest eine weitere Apparatur durchläuft, welche das Verfestigen der Suspension auf und in dem Support durch Erwärmen ermöglicht, wie z. B. ein elektrisch beheizter Ofen, und der so hergestellte Separator auf einer zweiten Rolle aufgerollt wird. Auf diese Weise ist es möglich, den erfindungsgemäßen Separator im Durchlaufverfahren herzustellen. Auch die Vorbehandlungsschritte können im Durchlaufverfahren unter Beibehaltung der genannten Parameter durchgeführt werden.

Soll der erfindungsgemäße Separator mit einem automatischen Abschaltmechanismus ausgerüstet werden, so kann dies z. B. dadurch geschehen, dass nach dem Verfestigen der auf das Substrat aufgebrachten Suspension eine Schicht aus Partikeln, die bei einer gewünschten Temperatur Schmelzen und die Poren des Separators verschließen, so genannte Abschaltpartikeln, zur Erzeugung eines Abschaltmechanismus auf den Separator aufgebracht und fixiert wird. Die Schicht aus Abschaltpartikeln kann z. B. durch Aufbringen einer Suspension von Wachspartikeln mit einer mittleren Partikelgröße größer der mittleren Porengröße des Separators in einem Sol, Wasser, Lösemittel oder Lösemittelgemisch erzeugt werden.

Die Suspension zur Aufbringung der Partikel enthält vorzugsweise von 1 bis 50 Gew.-%, bevorzugt von 5 bis 40 Gew.-% und ganz besonders bevorzugt von 10 bis 30 Gew.-% an Abschaltpartikeln, insbesondere Wachspartikeln in der Suspension.

Da die anorganischen Beschichtung des Separators häufig einen sehr hydrophilen Charakter hat, hat es sich als vorteilhaft erwiesen, wenn die Beschichtung des Separators unter Verwendung eines Silans in einem polymeren Sol als Haftvermittler hergestellt wurden und somit hydrophobiert wurden. Um eine gute Haftung und gleichmäßige Verteilung der Abschaltpartikel in der Abschaltschicht auch auf hydrophilen porösen anorganischen Separatorschichten zu erreichen, sind mehrere Varianten möglich.

In einer Ausführungsvariante des erfindungsgemäßen Verfahrens hat es sich als vorteilhaft erwiesen, die poröse anorganische Schicht des Separators vor dem Aufbringen der Abschaltpartikel zu hydrophobieren. Die Herstellung hydrophober Membrane, die nach dem selben Prinzip funktioniert, wird beispielsweise in WO 99/62624 beschrieben. Vorzugsweise wird die poröse anorganische Beschichtung durch Behandlung mit Alkyl-, Aryl- oder Fluoralkylsilanen, wie sie z. B. unter dem Namen Markennamen Dynasilan von der Degussa vertrieben werden, hydrophobiert. Es können dabei z. B. die bekannten Methoden der Hydrophobierung, die unter anderem für Textilien angewendet werden *(D. Knittel; E. Schollmeyer; Melliand Textilber. (1998) 79(5), 362-363),* unter geringfügiger Änderung der Rezepturen, auch für die porösen Beschichtungen des Separators angewendet werden. Zu diesem Zweck wird die Beschichtugn bzw. der Separator mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z. B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die anorganische Beschichtung des Separators aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Beschichtung vor dem Aufbringen der Abschaltpartikel auch mit anderen Haftvermittlern behandelt werden. Die Behandlung mit einem der unten genannten Haftvermittler kann dann ebenfalls wie oben beschrieben erfolgen, d. h. dass die poröse anorganische Schicht mit einem polymeren Sol, welches ein Silan als Haftvermittler aufweist, behandelt wird.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z. B. Alkohol, Ether oder Ketone, oder einem Lösemittelgemisch auf die anorganische Beschichtung des Separators und anschließendes Trocknen erzeugt. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße (D_{w}) größer oder gleich, vorzugsweise größer der mittleren Porengröße der Poren der porösen anorganischen Schicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Separatorschicht eindringen. Gründe für den Einsatz solcher Partikel können z. B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Schicht des Separators erfolgt. Eine solch hohe Viskosität der Suspension kann z. B. dadurch erreicht werden, dass der Suspension Hilfsstoffe, die das Fließverhalten beeinflussen, wie z. B. Kieselsäuren (Aerosil, Degussa) hinzugefügt werden. Beim Einsatz von Hilfsstoffen, wie z. B. Aerosil 200, ist häufig ein Anteil von 0,1 bis 10 Gew.-%, vorzugsweise 0,5 bis 50 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine anorganische Schicht des Separators aufgebracht werden, auch wenn diese nicht vor dem Aufbringen hydrophobiert wurde. Natürlich kann eine Haftvermittler aufweisende Suspension auch auf eine hydrophobierte Schicht oder auf eine Separatorschicht, bei deren Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Haftvermittler sind z. B. AMEO (3-Aminopropyltriethoxysilan), MEMO (3-methacryloxypropyltrimethoxysilan), Silfin (Vinylsilan + Initiator + Katalysator), VTEO (Vinyltriethoxysilan) oder VTMO (Vinyltrimethoxysilan). Solche Silane sind z. B. von der Degussa auch in wässriger Lösung unter der Bezeichnung Dynasilan 2926, 2907 oder 2781 erhältlich. Ein Anteil von maximal 10 Gew.-% an Haftvermittler hat sich als ausreichend für die Sicherstellung einer genügend großen Haftung der Abschaltpartikel an der porösen anorganischen Schicht herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht des Separators erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird.

Es kann vorteilhaft sein, wenn die Partikel nach dem Aufbringen auf die poröse anorganische Schicht durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen anorganischen Separatorschicht haften.

Das Aufbringen der Suspension mit anschließendem Trocknen sowie ein eventuelles Erwärmen über die Glasübergangstemperatur kann kontinuierlich oder quasi kontinuierlich durchgeführt werden. Wird eine flexibler Separator als Ausgangsmaterial eingesetzt, so kann diese wiederum von einer Rolle abgewickelt, durch eine Beschichtungs-, Trocknungs- und gegebenenfalls Erwärmungsapparatur geführt und anschließend wieder aufgerollt werden.

Erfindungsgemäße hybride keramische Separatoren können als Separatoren in Batterien, insbesondere Lithium-Batterien, verwendet werden. Bei der erfindungsgemäßen Verwendung des Separators als Separator in Batterien wird der Separator üblicherweise mit dem Elektrolyten getränkt zwischen der Anode und der Kathode platziert. Es können alle aus dem Stand der Technik bekannten Elektrolyt- und Elektrodenmaterialien verwendet werden, da die erfindungsgemäßen Separatoren gegen alle diese Materialen inert sind und sich nicht, auch nicht bei erhöhter Temperatur, verändern.

Der erfindungsgemäße Separator ist insbesondere für primäre und sekundäre (wiederaufladbare) Lithium-Batterien geeignet. Besonders geeignet ist der erfindungsgemäße Separator für eine Verwendung in Lithium-Hochenergiebatterien.

Gegenstand der Erfindung sind auch Batterien, insbesondere Lithiumbatterien und ganz besonders bevorzugt Lithium-Hochenergiebatterien, die einen erfindungsgemäßen Separator aufweisen.

Der erfindungsgemäße Gegenstand wird durch die Abbildungen Fig. 1 bis Fig. 5 näher erläutert, ohne dass die Erfindung auf diese Ausführungsformen beschränkt sein soll.

Die Figur Fig. 1 zeigt eine elektronenmikroskopische (TEM) Aufnahme von Kieselsäure des Typs Aerosil®200 der Degussa. In Fig. 2 ist eine rasterelektronenmikroskopische Aufnahme von Kieselsäure des Typs Aerosil®200 der Degussa abgebildet.

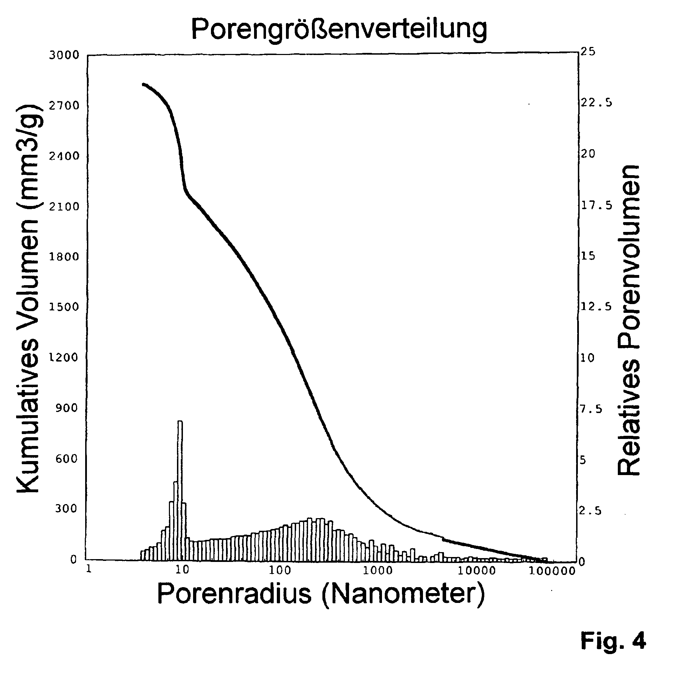

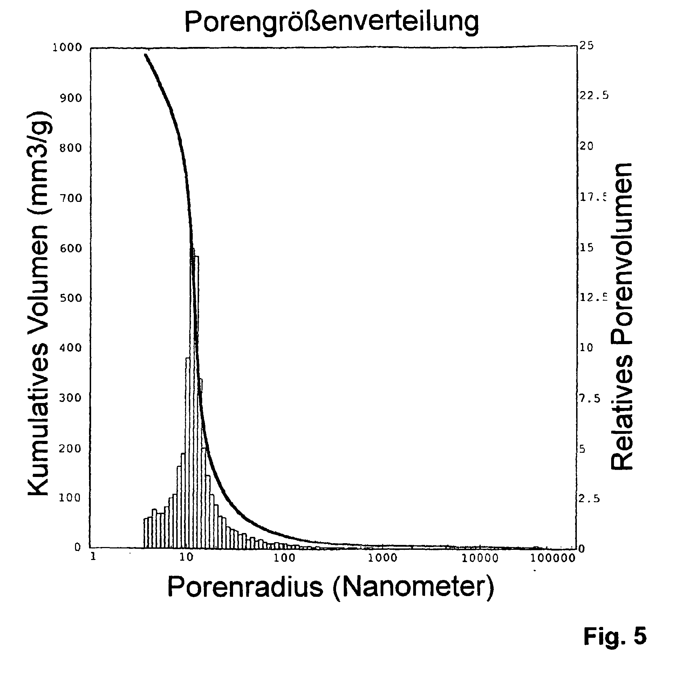

In den Figuren Fig. 3 bis Fig. 5 sind jeweils Diagramme abgebildet, in denen die Porengrößenverteilung und die Porengrößen gegen das Porenvolumen aufgetragen sind. Fig. 3 zeigt die Porenradienverteilung einer anorganischen Komponente die gemäß Beispiel 1 a hergestellt wurde, wobei in eine Mischung aus 60 g Cyclohexan und 1,33 g Levasil 300/30, einem 30 Gew.-% SiO₂, aufweisendem Sol der Firma Bayer AG, 6 g Aerosil 200 der Firma Degussa eingerührt wurden und nach dem Gelieren dieser Mischung das Lösemittel verdampft und das Gel vollständig bei 200 °C getrocknet und verfestigt wurde. Fig. 4 zeigt die Porenradienverteilung einer anorganischen Komponente die gemäß Beispiel 1 a hergestellt wurde, wobei in eine Mischung aus 53 g Isopropanol und 1,33 g Levasil 300/30, einem 30 Gew.-% SiO₂, aufweisendem Sol der Firma Bayer AG, 6 g Aerosil 200 der Firma Degussa eingerührt wurden und nach dem Gelieren dieser Mischung das Lösemittel verdampft und das Gel vollständig bei 200 °C getrocknet und verfestigt wurde. Fig. 5 zeigt die Porenradienverteilung einer anorganischen Komponente die gemäß Beispiel 1 a hergestellt wurde, wobei in eine Mischung aus 18 g Ethanol, 18 g Wasser und 1,33 g Levasil 300/30, einem 30 Gew.-% SiO₂ aufweisendem Sol der Firma Bayer AG, 6 g Aerosil 200 der Firma Degussa eingerührt wurden und nach dem Gelieren dieser Mischung das Lösemittel verdampft und das Gel vollständig bei 200 °C getrocknet und verfestigt wurde.

Die vorliegende Erfindung wird durch die nachfolgenden Beispiele beschrieben, ohne darauf beschränkt zu sein.

### Vergleichsbeispiel 1:

### Herstellung eines S450PET-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm (dünnere Vliese lassen sich mit diesen großen Partikeln nur schwer beschichten, ohne dass es zu Fehlstellen und Löchern kommt) und einem Flächengewicht von etwa 20 g/m² wird damit in einem kontinuierlichen Aufwalzverfahren (Bandgeschwindigkeit ca. 8 m/h, T = 200 °C) mit obigem Schlicker beschichtet. Bei diesem Aufwalzverfahren wird der Schlicker mit einer Walze, die sich gegenläufig zur Bandrichtung (Bewegungsrichtung des Vlieses) bewegt, auf das Vlies aufgewalzt. Das Vlies läuft anschließend durch einen Ofen, der die angegebene Temperatur aufweist. In den nachfolgenden Versuchen wird die gleiche Methode bzw. Anordnung verwendet. Man erhält am Ende einen Separator mit einer mittleren Porenweite von 450 nm, einer Dicke von ca. 50 µm und einem Gewicht von ca. 50 g/m² Der Flächenwiderstand (gemessen mittels Impedanzspektroskopie und nicht-blockierenden Li-Elektroden) des Separators getränkt mit einer Lösung von LiPF₆ in EC/DMC liegt bei ca. 5 Ωcm².

### Vergleichsbeispiel 2:

### Li-Ionen-Batterie mit hybridem keramischen Separator nach dem Stand der Technik

Ein gemäß Vergleichsbeispiel 1 hergestellter S450PET-Separator wird in eine Li-Ionen-Zelle, bestehend aus einer Positiv-Masse aus LiCoO₂ einer Negativ-Masse bestehend aus Graphit und einem Elektrolyten aus LiPF₆ in Ethylencarbonat/Dimethylcarbonat, eingebaut [LiCoO2 (36.3mg) // S-450-PET, EC/DMC 1:1, 1M LiPF₆ // Graphit (17.0mg)]. Die Batterie läuft stabil über mehrere hundert Zyklen. Aufgrund des recht großen Innenwiderstandes im Separator kann nur etwa 90 % der Kapazität der Zelle mit konstant Strom geladen werden.

### Beispiel 1a

### Herstellung eines keramischen Pulvers aus nanoskaligem Aerosil®200

1,33 g Levasil®300/30, einem SiO₂-Sol der Bayer AG, welches 30 Gew.-% SiO₂ aufweist, werden zu 6 g Isopropanol und 54 g Cyclohexan gegeben. In dieses Gemisch werden 6 g Aerosil®200, eine pyrogene Kieselsäure der Degussa AG, eingerührt. Nach dem Gelieren des Sols wird das Lösemittel verdampft und das Gel vollständig bei 200 °C getrocknet und verfestigt. Das Material hat eine mittlere Porengröße von 170 nm und eine Porosität von 83 % wie sich mittels Hg-Porosimetrie bestimmen lässt.

### Beispiel 1b - 1u:

### Herstellung eines keramischen Pulvers aus nanoskaligen, pyrogenen Oxiden

Weitere Mischungen wurden gemäß Beispiel 1a hergestellt und analysiert. Die nachfolgende Tabelle 3 gibt eine Übersicht über die Edukte und Ergebnisse der Versuche 1b bis 1u. Das Eduktverhältnis bezieht sich dabei auf die Gewichtsverhältnisse von SiO₂ im Levasil zu Aerosil.

**Tabelle 3**

| **Beispiel** | **Edukte** | **Eduktverhältnis Levasil:Aerosil** | **Trocknungstemp. °C** | **mittl.Porenradius nm** | **Porosität %** |
|---|---|---|---|---|---|
| | 1,33 g Levasil 300/30 | | | | |
| 1b | 16 g Ethanol/H2O 1:1 | 1:15 | 200 | 11,9 | 71,2 |
| | 62 g Aerosil 200 | | | | |
| | 1,33 g Levasil 300/30 | | | | |
| 1c | 40 g Ethanol/H2O 1:1 | 1:15 | 200 | 10,9 | 95,7 |
| | 6 g Aerosil 200 | | | | |
| | 1,33 g Levasil 300/30 | | | | |
| 1d | 40 g Ethanol/H2O 1:1 | 1:15 | 200 | 10,5 | 66,6 |
| | 6 g Aerosil 200 | | | | |
| | 1,33 g Levasil 300/30 | | | | |
| 1e | 40 g Ethanol | 1:15 | 200 | 36,4 | 79,1 |
| | 6 g Aerosil 200 | | | | |
| | 1,33 g Levasil 300/30 | | | | |
| 1f | 40 g Ethanol | 1:15 | 200 | 30,8 | 76,4 |
| | 6 g Aerosil 200 | | | | |
| | 1,33 g Levasil 300/30 | | | | |
| 1g | 50 g n-Butanol | 1:15 | 200 | 63,1 | 78,4 |
| | 6 g Aerosil 200 | | | | |
| | 1,33 g Levasil 300/30 | | | | |
| 1h | 53g Isopropanol | 1.15 | 200 | 94,7 | 82.3 |
| | 6 g Aerosil 200 | | | | |
| | 1,33 g Levasil 300/30 | | | | |
| 1i | 55g Isopropopanol:Aceton1:1 | 1:15 | 200 | 58,7 | 77,9 |
| | 6 g Aerosil 200 | | | | |
| | 1,33 g Levasil 300/30 | | | | |
| 1k | 61g Isopropanol:Cyclohexan1:1 | 1:15 | 200 | 97,4 | 84,2 |
| | 6 g Aerosil 200 | | | | |
| | 1,33 g Levasil 300/30 | | | | |
| 11 | 60 g Cyclohexan | 1:15 | 200 | 310,7 | 85,5 |
| | 6 g Aerosil 200 | | | | |
| | 1,33 g Levasil 300/30 | | | | |
| 1 m | 50 g Ethanol/H2O 1:1 | 1:15 | 200 | 7,8 | 63.8 |
| | 6 g Aerosil 380 | | | | |
| | 1,33 g Levasil 300/30 | | | | |
| 1n | 50 Ethanol | 1:15 | 200 | 33 | 73 |
| | 6 g Aerosil 380 | | | | |
| | 1,33 g Levasil 300/30 | | | | |
| 10 | 60 g Isopropanol | 1:15 | 200 | 72,3 | 4,2 |
| | 6 g Aerosil 380 | | | | |
| | 1,33 g Levasil 300/30 | | | | |
| 1p | 60 g Cyclohexan | 1:15 | 200 | 656,5 | 78,6 |
| | 6 g Aerosil 380 | | | | |
| | 1,33 g Levasil 300/30 | | | | |
| 1q | 40 g Ethanol/H2O 1:1 | 1:15 | 200 | 7,8 | 63,1 |
| | 6 g Aerosil 300 | | | | |
| | 1,33 g Levasil 300/30 | | | | |
| 1r | 40 g Ethanol/H20 1:1 | 1:15 | 200 | 7,6 | 59,6 |
| | 6 g Aerosil 300 | | | | |
| | 1,33 g Levasil 300/30 | | | | |
| 1s | 45g Ethanol | 1:15 | 200 | 11,9 | 36,7 |
| | 6 g Aerosil 300 | | | | |
| | 1,33 g Levasil 300/30 | | | | |
| 1t | 55g,lsopropanol | 1:15 | 200 | 75,8 | 79 |
| | 6 g Aerosil 300 | | | | |
| | 1,33 g Levasil 300/30 | | | | |
| 1 u | 60 g Cyclohexan | 1:15 | 200 | 740,5 | 84 |
| | 6 g Aerosil 300 | | | | |

### Beispiel 2a:

### Herstellung eines erfindungsgemäßen Separators für Li-Hochenergiebatterien

1,33 g Levasil®300/30 (Bayer AG) werden zu 6 g Isopropanol und 54 g Cyclohecxan gegeben. In dieses Gemisch werden 6 g Aerosil®200 eingerührt.

Ein PET-Vlies mit einer Dicke von ca. 13 µm und einem Flächengewicht von etwa 6 g/m² wird in einem kontinuierlichen Aufwalzverfahren (Bandgeschwindigkeit ca. 8 m/h, T = 200 °C) mit obigem Schlicker beschichtet. Bei diesem Aufwalzverfahren wird der Schlicker mit einer Walze, die sich gegenläufig zur Bandrichtung (Bewegungsrichtung des Vlieses) bewegt, auf das Vlies aufgewalzt. Das Vlies läuft anschließend durch einen Ofen, der die angegebene Temperatur aufweist. Man erhält am Ende einen Separator mit einer mittleren Porenweite von 180 nm, einer Dicke von ca. 25 µm und einem Gewicht von ca.15 g/m². Der Flächenwiderstand (gemessen mittels Impedanzspektroskopie und nicht-blockierenden Li-Elektroden) des Separators getränkt mit einer Lösung von LiPF₆ in EC/DMC liegt bei 1,5 Ωcm².

In den nachfolgenden Versuchen wird die gleiche Methode bzw. Anordnung wie in Beispiel 2a verwendet.

### Beispiel 2b - 2u:

### Herstellung eines erfindungsgemäßen Separators für Li-Hochenergiebatterien

Gemäß der Beschreibung in Beispiel 2a können mit den aus den Beispielen 1b - 1u bekannten Gemischen weitere Separatoren auf Basis des dünnen 13 µm-PET-Vlieses hergestellt werden. Man erhält am Ende Separatoren mit einer mittleren Porenweite, die vergleichbar zu den bei den Beispielen 1b - 1u genannten Werten ist, und die Dicken von ca. 25 µm und Flächengewichte von ca. 15 g/m² aufweisen.

### Beispiel 3:

### Li-Ionen-Batterie mit erfindungsgemäßem hybridem keramischen Separator

Ein gemäß Beispiel 2a hergestellter Separator wird in eine Li-Ionen-Zelle, bestehend aus einer Positiv-Masse aus LiCoO₂, einer Negativ-Masse bestehend aus Graphit und einem Elektrolyten aus LiPF₆ in Ethylencarbonat/Dimethylcarbonat, eingebaut [LiCoO2 (36.3mg) // S-450-PET, EC/DMC 1:1, 1M LiPF₆ // Graphit (17.0mg)]. Die Batterie läuft stabil über mehrere hundert Zyklen. Aufgrund des deutlich geringeren Innenwiderstandes im Separator kann nahezu die gesamte Kapazität der Zelle mit konstantem Strom geladen werden. Aufgrund des dünneren Separators und des geringeren Flächengewichts liegen sowohl die massen- als auch die volumenbezogene spezifische Energiedichte deutlich über jener von Vergleichsbeispiel 2.

## Patentansprüche

1. Separator, insbesondere für Lithium-Hochenergiebatterien, umfassend ein flächiges, mit einer Vielzahl von Öffnungen versehenes, flexibles Substrat mit einer auf und in diesem Substrat befindlichen porösen anorganischen Beschichtung, wobei das Material des Substrates ausgewählt ist aus einem Vlies aus nicht elektrisch leitfähigen Polymerfasern,
**dadurch gekennzeichnet,**
**dass** der Separator ein Gewicht von kleiner 50 g/m2 und eine Dicke von kleiner 35 µm aufweist und dass die poröse anorganische Beschichtung durch über SiO₂ oder ZrO₂ verklebte Oxidpartikel von SiO₂ mit einer Primärpartikelgröße von 5 bis 100 nm aufgebaut ist.

2. Separator gemäß Anspruch 1,
**dadurch gekennzeichnet,**
**dass** der Separator ein Gewicht von kleiner 20 g/m² aufweist.

3. Separator gemäß einem der Ansprüche 1 oder 2,
**dadurch gekennzeichnet,**
**dass** die Polymerfasern, ausgewählt sind aus Fasern von Polyacrylnitril, Polyester und/oder Polyolefin.

4. Separator gemäß zumindest einem der Ansprüche 1 bis 3,
**dadurch gekennzeichnet,**
**dass** die Polymerfasern einen Durchmesser von 0,1 bis 10 µm aufweisen.

5. Separator gemäß zumindest einem der Ansprüche 1 bis 4,
**dadurch gekennzeichnet,**
**dass** das flexible Substrat eine Porosität von 50 bis 97 % aufweist.

6. Separator gemäß zumindest einem der Ansprüche 1 bis 5,
**dadurch gekennzeichnet,**
**dass** das flexible Substrat eine Dicke von kleiner 30 µm aufweist.

7. Separator nach Anspruch 6,
**dadurch gekennzeichnet,**
**dass** das Vlies ein Gewicht von kleiner 20 g/m² aufweist.

8. Separator gemäß zumindest einem der Ansprüche 1 bis 7,
**dadurch gekennzeichnet,**
**dass** der Separator eine Porosität von 30 bis 80 % aufweist.

9. Separator gemäß zumindest einem der Ansprüche 1 bis 8,
**dadurch gekennzeichnet,**
**dass** der Separator eine Reißfestigkeit von mehr als 1 N/cm aufweist.

10. Separator gemäß zumindest einem der Ansprüche 1 bis 9,
**dadurch gekennzeichnet,**
**dass** der Separator ohne Beschädigung bis auf einen Radius bis herab zu 100 m biegbar ist.

11. Separator gemäß zumindest einem der Ansprüche 1 bis 10,
**dadurch gekennzeichnet,**
**dass** der Separator ohne Beschädigung bis auf einen Radius bis herab zu 0,5 mm biegbar ist.

12. Verfahren zur Herstellung eines Separator, insbesondere für Lithium-Hochenergiebatterien, umfassend ein flächiges, mit einer Vielzahl von Öffnungen versehenes, flexibles Substrat mit einer auf und in diesem Substrat befindlichen porösen anorganischen Beschichtung, wobei das Material des Substrates ausgewählt ist aus einem Vlies aus nicht elektrisch leitfähigen Polymerfasern, wobei der Separator ein Gewicht von kleiner 50 g/m² und eine Dicke von kleiner 35 µm aufweist und wobei die poröse anorganische Beschichtung durch über SiO₂ oder ZrO₂ verklebte Oxidpartikel mit einer Primärpartikelgröße von 5 bis 100 nm, aufgebaut ist,
**dadurch gekennzeichnet,**
**dass** ein flächiges, mit einer Vielzahl von Öffnungen versehenes, flexibles Substrat in und auf diesem Substrat mit einer Beschichtung versehen wird, wobei das Material des Substrates ausgewählt ist aus Vliesen mit einer Dicke von kleiner 30 µm von nicht elektrisch leitfähiger Fasern von Polymeren und die Beschichtung eine poröse, elektrisch isolierende, keramische Beschichtung ist, die durch Aufbringen einer Suspension auf das Substrat und zumindest einmaliges Erwärmen, bei welchem die Suspension auf und im Substrat verfestigt wird, erstellt wird, wobei die Suspension durch suspendieren von Metalloxidpartikeln zumindest eines Oxids der Elemente Al, Zr und/oder Si, die eine Primärpartikelgröße von 5 bis 100 nm aufweisen, in einem Sol von zumindest einem der Elemente Si und/oder Zr erhalten wird.

13. Verfahren gemäß Anspruch 12,
**dadurch gekennzeichnet,**
**dass** die Fasern ausgewählt sind aus Polyacrylnitril, Polyester oder Polyolefin.

14. Verfahren nach einem der Ansprüche 12 oder 13,
**dadurch gekennzeichnet,**
**dass** die Suspension durch Aufdrucken, Aufpressen, Einpressen, Aufrollen, Aufrakeln, Aufstreichen, Tauchen, Spritzen oder Aufgießen auf und in das Substrat gebracht wird.

15. Verfahren nach einem der Ansprüche 12 bis 14,
**dadurch gekennzeichnet,**
**dass** zur Herstellung des Sols zumindest eine Alkoholatverbindung der Elemente Zr und/oder Si oder zumindest ein Nitrat, Carbonat oder Halogenid der Elemente Zr und/oder Si hydrolisiert wird.

16. Verfahren nach zumindest einem der Ansprüche 12 bis 15,
**dadurch gekennzeichnet,**
**dass** Metalloxidpartikel suspendiert werden, die eine mittlere Primärpartikelgröße von 7 bis 50 nm aufweisen.

17. Verfahren nach zumindest einem der Ansprüche 12 bis 16,
**dadurch gekennzeichnet,**
**dass** der Massenanteil der suspendierten Komponente dem 1 bis 100fachen des eingesetzten Sols entspricht.

18. Verfahren nach zumindest einem der Ansprüche 12 bis 17,
**dadurch gekennzeichnet,**
**dass** die auf und im Support vorhandene Suspension durch Erwärmen auf 150 bis 500 °C verfestigt wird.

19. Verfahren nach Anspruch 18,
**dadurch gekennzeichnet,**
**dass** das Erwärmen für 0,5 bis 10 Minuten bei einer Temperatur von 200 bis 280 °C erfolgt.

20. Separator, insbesondere für Lithium-Hochenergiebatterien, umfassend ein flächiges, mit einer Vielzahl von Öffnungen versehenes, flexibles Substrat mit einer auf und in diesem Substrat befindlichen porösen anorganischen Beschichtung, wobei das Material des Substrates ausgewählt ist aus einem Vlies aus nicht elektrisch leitfähigen Polymerfasern, wobei der Separator ein Gewicht von kleiner 50 g/m² und eine Dicke von kleiner 35 µm auf weist und wobei die poröse anorganische Beschichtung durch über SiO₂ oder ZrO₂ verklebte Oxidpartikel mit einer Primärpartikelgröße von 5 bis 100 nm, aufgebaut ist, erhalten durch ein Verfahren gemäß einem der Ansprüche 12 bis 19.

21. Verwendung eines Separators gemäß zumindest einem der Ansprüche 1 bis 12 oder 20 als Separator in Lithium-Batterien.

22. Batterie, einen Separator gemäß zumindest einem der Ansprüche 1 bis 12 oder 20 aufweisend.

## Claims

1. A separator especially for a lithium high energy battery, comprising a sheetlike flexible substrate having a multiplicity of openings and having a porous inorganic coating on and in said substrate, the material of said substrate being selected from a nonwoven of electrically nonconductive polymeric fibres, **characterized by** a weight of less than 50g/m² and a thickness of less than 35 µm and by the porous inorganic coating being constructed from oxide particles of SiO₂ having a primary particle size of from 5 to 100 nm and adhered via SiO₂ or ZrO₂.

2. A separator according to claim 1, **characterized by** a weight of less than 20g/m²

3. A separator according to either of claims 1 and 2, **characterized by** said polymeric fibres being selected from fibres of polyacrylonitrile, polyester and/or polyolefin.

4. A separator according to at least one of claims 1 to 3, **characterized by** said polymeric fibres being from 0.1 to 10 µm in diameter.

5. A separator according to at least one of claims 1 to 4, **characterized by** said flexible substrate having a porosity of from 50% to 97%.

6. A separator according to at least one of claims 1 to 5, **characterized by** said flexible substrate being less than 30 µm in thickness.

7. A separator according to claim 6, **characterized by** said nonwoven being less than 20 g/m² in weight.

8. A separator according to at least one of claims 1 to 7, **characterized by** a porosity of from 30% to 80%.

9. A separator according to at least one of claims 1 to 8, **characterized by** a breaking strength of more than 1 N/cm.

10. A separator according to at least one of claims 1 to 9, **characterized by** being bendable around a radius down to 100 m without damage.

11. A separator according to at least one of claims 1 to 10, **characterized by** being bendable around a radius down to 0.5 mm without damage.

12. A process for producing a separator especially for a lithium high energy battery, comprising a sheetlike flexible substrate having a multiplicity of openings and having a porous inorganic coating on and in said substrate, the material of said substrate being selected from a nonwoven of electrically nonconductive polymeric fibres, the separator having a weight of less than 50 g/m² and a thickness of less than 35 µm and the porous inorganic coating being constructed from oxide particles having a primary particle size of from 5 to 100 nm and adhered via SiO₂ or ZrO₂, **characterized in that** a sheetlike flexible substrate having a multiplicity of openings is provided with a coating on and in said substrate, the material of said substrate being selected from nonwovens less than 30 µm in thickness of electrically nonconductive fibres of polymers and said coating being a porous electrically insulating ceramic coating which is prepared by applying a suspension to said substrate and heating one or more times to solidify said suspension on and in said substrate the suspension being obtained by suspending metal oxide particles of at least one oxide of the elements Al, Zr and/or Si, which have a primary particle size of from 5 to 100 nm in a sol of at least one of the elements Si and/or Zr.

13. A process according to claim 12, **characterized in that** said fibres are selected from polyacrylonitrile, polyester or polyolefin.

14. A process according to either of claims 12 and 13, **characterized in that** said suspension is brought onto and into said substrate by printing on, pressing on, pressing in, rolling on, knifecoating on, spreadcoating on, dipping; spraying or pouring on.

15. A process according to any of claims 12 to 14, **characterized in that** said sol is prepared by hydrolysing at least one alkoxide compound of the elements Zr and/or Si or at least one nitrate, carbonate or halide of the elements Zr and/or Si.

16. A process according to at least one of claims 12 to 15, **characterized in that** metal oxide particles having an average primary particle size of from 7 to 50 nm are suspended.

17. A process according to at least one of claims 12 to 16, **characterized in that** the mass fraction of said suspended component is from 1 to 100 times that of the sol used.

18. A process according to at least one of claims 12 to 17, **characterized in that** said suspension present on and in said support is solidified by heating at from 150 to 500°C.

19. A process according to claim 18, **characterized in that** said heating is effected at from 200 to 280°C for from 0.5 to 10 minutes.

20. A separator especially for a lithium high energy battery, comprising a sheetlike flexible substrate having a multiplicity of openings and having a porous inorganic coating on and in said substrate, the material of said substrate being selected from a nonwoven of electrically nonconductive polymeric fibres, the separator having a weight of less than 50 g/m² and a thickness of less than 35 µm and the porous inorganic coating being constructed from oxide particles having a primary particle size of from 5 to 100 nm and adhered via SiO₂ or ZrO₂, obtained by a process according to any one of claims 12 to 19.

21. The use of a separator according to at least one of claims 1 to 12 or 20 as a separator in a lithium battery.

22. A battery comprising a separator according to at least one of claims 1 to 12 or 20.

## Revendications

1. Séparateur, en particulier pour batteries haute énergie au lithium, comprenant un substrat flexible, plat, muni d'un grand nombre d'ouvertures, sur et dans lequel se trouve un revêtement inorganique poreux, la matière constituant ce substrat étant choisie parmi des non-tissés de fibres de polymère non électriquement conductrices,
**caractérisé en ce que**
ce séparateur a un poids inférieur à 50g/m² et une épaisseur inférieure à 35 µm et le revêtement inorganique poreux est constitué par des particules d'oxyde de SiO₂ d'une granulométrie primaire de 5 à 100 nm, collées sur SiO₂ ou ZrO₂ .

2. Séparateur selon la revendication 1,
**caractérisé en ce que**
ce séparateur a un poids inférieur à 20 g/m².

3. Séparateur selon l'une des revendications 1 ou 2,
**caractérisé en ce que**
les fibres de polymère sont choisies parmi des fibres de polyacrylonitrile, polyester et/ou polyoléfine.

4. Séparateur selon au moins l'une des revendications 1 à 3,
**caractérisé en ce que**
les fibres de polymère ont un diamètre de 0,1 à 10 µm.

5. Séparateur selon au moins l'une des revendications 1 à 4,
**caractérisé en ce que**
le substrat flexible a une porosité de 50 à 97 %.

6. Séparateur selon au moins l'une des revendications 1 à 5,
**caractérisé en ce que**
le substrat flexible a une épaisseur inférieure à 30 µm.

7. Séparateur selon la revendication 6,
**caractérisé en ce que**
le non tissé a un poids inférieur à 20 g/m².

8. Séparateur selon au moins l'une des revendications 1 à 7,
**caractérisé par**
une porosité de 30 à 80 %.

9. Séparateur selon au moins l'une des revendications 1 à 8,
**caractérisé par**
une résistance à la rupture supérieur à 1N/cm.

10. Séparateur selon au moins l'une des revendications 1 à 9,
**caractérisé en ce que**
le séparateur peut être replié sans détérioration jusqu'à un rayon de 100 m.

11. Séparateur selon au moins l'une des revendications 1 à 10,
**caractérisé en ce que**
le séparateur peut être replié sans détérioration jusqu'à un rayon de 0,5 mm.

12. Procédé de production d'un séparateur, en particulier pour batteries haute énergie au lithium, comprenant un substrat flexible, plat, muni d'un grand nombre d'ouvertures, sur et dans lequel se trouve un revêtement inorganique poreux, la matière constituant ce substrat étant choisie parmi des non-tissés de fibres de polymère non électriquement conductrices,
ce séparateur ayant un poids inférieur à 50 g/m² et une épaisseur inférieure à 35 µm et le revêtement inorganique poreux étant constitué par des particules d'oxyde d'une granulométrie primaire de 5 à 100 nm, collées sur SiO₂ ou ZrO₂,
**caractérisé en ce qu'**
un substrat flexible, plat, muni d'un grand nombre d'ouvertures, présente un revêtement à l'intérieur et en surface, la matière constituant ce substrat étant choisie parmi des non-tissés d'une épaisseur inférieure à 30 µm de fibres de polymère non électriquement conductrices, et le revêtement est un revêtement céramique poreux, électriquement isolant, qui est produit par application d'une suspension sur le substrat et par au moins un chauffage unitaire, au cours duquel la suspension est solidifiée sur et dans le substrat, la suspension étant obtenue par mise en suspension de particules d'oxyde(s) métallique(s) constituées d'au moins un oxyde des éléments Al, Zr et/ou Si, qui présentent un granulométrie primaire de 5 à 100 nm, dans un sol d'au moins un des éléments Si et/ou Zr.

13. Procédé selon la revendication 12,
**caractérisé en ce que**
les fibres sont choisies parmi des fibres de polyacrylonitrile, de polyester ou de polyoléfine.

14. Procédé selon l'une des revendications 12 ou 13,
**caractérisé en ce que**
la suspension est appliquée sur et dans le substrat par pressage, par compression, par injection sous pression, au rouleau, à la racle, par badigeonnage, au trempé, par pulvérisation ou par coulée.

15. Procédé selon au moins l'une des revendications 12 à 14,
**caractérisé en ce que**
pour la préparation du sol, on hydrolyse au moins un composé alcoolate des éléments Zr et/ou Si ou au moins un nitrate, un carbonate ou un halogénure des éléments Zr et/ou Si.

16. Procédé selon au moins l'une des revendications 12 à 15,
**caractérisé en ce qu'**
on met en suspension des particules d'oxyde(s) métallique(s) présentant une granulométrie primaire moyenne de 7 à 50 nm.

17. Procédé selon au moins l'une des revendications 12 à 16,
**caractérisé en ce que**
la proportion en masse des composants mis en suspension représente 1 à 100 fois celle du sol utilisé.

18. Procédé selon au moins l'une des revendications 12 à 17,
**caractérisé en ce que**
la suspension présente sur et dans le support est solidifiée par chauffage à 150 à 500 °C.

19. Procédé selon la revendication 18,
**caractérisé en ce que**
le chauffage a lieu pendant 0,5 à 10 minute(s) à une température de 200 à 280 °C.

20. Séparateur, en particulier pour des batteries haute énergie au lithium, comprenant un substrat flexible, plat, muni d'un grand nombre d'ouvertures, sur et dans lequel se trouve un revêtement inorganique poreux, la matière constituant ce substrat étant choisie parmi des non-tissés de fibres de polymère non électriquement conductrices, ce séparateur ayant un poids inférieur à 50g/m² et une épaisseur inférieure à 35 µm, et le revêtement inorganique poreux étant constitué par des particules d'oxyde(s) d'une granulométrie primaire de 5 à 100 nm, collées sur SiO₂ ou ZrO₂, obtenu par un procédé selon l'une des revendications 12 à 19.

21. Utilisation d'un séparateur selon au moins l'une des revendications 1 à 12 ou 20, comme séparateur dans des batteries au lithium.

22. Batterie comprenant un séparateur selon au moins l'une des revendications 1 à 12 ou 20.
